# EUROPÄISCHE PATENTANMELDUNG

(11) **EP 1 684 054 A1**
(43) Veröffentlichungstag der Anmeldung: **26.07.2006**
(21) Anmeldenummer: 05028339.9
(22) Anmeldetag: 23.12.2005
(51) Int. Cl.: G01F 1/66

(54) **Vorrichtung zur Durchflussmessung und Verfahren zur Durchflussmessung**

(30) Priorität: 14.01.2005 DE 102005001895
(71) Anmelder: Landis+Gyr GmbH, 90495 Nürnberg (DE)
(72) Erfinder: Polinski, Ewald, 91177 Thalmässing (DE)
(74) Vertreter: Bauerschmidt, Peter

(57) **Zusammenfassung**

Bei einer Vorrichtung zur Durchflussmessung eines strömenden Mediums, ist zwischen einem Einlassrohr (18) und einem Auslassrohr (19) eine Ultraschallmessstrecke (1) zumindest teilweise senkrecht zu einer Strömungsrichtung (3) des Mediums angeordnet. Ein Ultraschallsignal (6) wird von einer ersten Abstrahlfläche bzw. Empfangsfläche (16a) einer Ultraschallwandleranordnung (5) entlang einer ersten Wandseite einer Strömungstrennwand (2) zu einem Umlenkspiegel (7) ausgesendet auf eine zweite Wandseite dieser Strömungstrennwand (2) umgelenkt. Mit einer zweiten Abstrahlfläche bzw. Empfangsfläche (16b) der Ultraschallwandleranordnung (5) wird das ausgesandte Ultraschallsignal (6) empfangen.

## Beschreibung

Die Erfindung fällt in das Gebiet der Ultraschallmesstechnik; sie betrifft eine Vorrichtung zur Durchflussmessung eines strömenden Mediums, umfassend ein Einlassrohr und ein Auslassrohr, zwischen denen eine Ultraschallmessstrecke angeordnet ist gemäss dem Oberbegriff des Anspruchs 1; sie betrifft ferner ein Verfahren zur Durchflussmessung eines strömenden Mediums mittels der Ultraschallwandleranordnung gemäss dem Oberbegriff des Anspruchs 8.

Zähler für die Verbrauchsmessung von Wasser, Wärme bzw. Kälte sind bekannt. Solche Zähler können nach dem Laufzeitdifferenzprinzip ausgestaltet sein und weisen eine Ultraschallmessstrecke zur Erfassung eines Durchflusses eines Mediums auf. Für eine genaue Messung ist grundsätzlich von Bedeutung, dass die Ultraschallmessstrecke zumindest eine entsprechende Weglänge aufweist, um ausgesendete Ultraschallsignale und empfangene Ultraschallsignale mittels geeigneter Auswerteelektronik identifizieren zu können.

Aus der Laufzeitdifferenz zwischen der mitlaufenden Ultraschallmessung in Bezug auf das strömende Medium und der gegenläufigen Ultraschallmessung ergibt sich dann die Strömungsgeschwindigkeit des Mediums.

Typischerweise sind Ultraschallmessrohre mit zwei Ultraschallwandlern - einer im Zulaufbereich und einer im Ablaufbereich - ausgestattet. Zwischen ihnen werden Ultraschallsignale gegenseitig hin und hergeschickt, um eine Laufzeitdifferenzbestimmung durchzuführen.

Eine Variante mit lediglich einem einzigen Ultraschallwandler zeigt die DE 196 49 437 Cl. Hier ist zur Messung der Fließgeschwindigkeit eines Mediums vorgesehen, dass lediglich ein Schallkopf zum Einsatz gelangt. Sein ausgesendetes Schallsignal wird vor der Einkopplung in das Medium zunächst über einen Doppelreflektor geführt und aufgespalten, und zwar derart, dass quasi ein ringförmig geschlossener Schallweg mit einander entgegengerichteten Schallsignalen gegeben ist.

Das Ultraschallsignal muss bei dieser Anordnung pro Senderichtung und Messung zweimal eine Messrohrwand durchströmen, was einen entsprechenden Signalpegel voraussetzt. Abgesehen davon treten bei der Messung sehr kleiner Fließgeschwindigkeiten entlang einer vergleichsweise kurzen Ultraschallmessstrecke entsprechend kleine Zeitdifferenzen zwischen den Empfangssignalen auf. Diese Empfangssignale können sich dabei überlagern und eine neue Form bilden, so dass eine elektronische Auswertung derselben große Anstrengungen nötig macht.

Es ist deshalb Aufgabe der vorliegenden Erfindung eine Vorrichtung zur Durchflussmessung eines strömenden Mediums dahingehend weiter zu entwickeln, dass mittels einer Ultraschallwandleranordnung eine gegenüber dem Stand der Technik genauere Messung der Fließgeschwindigkeit eines Mediums erfolgen kann. Darüber hinaus ist es Aufgabe der Erfindung ein Verfahren zur Durchflussmessung eines strömenden Mediums dahingehend weiter zu entwickeln, dass eine gegenüber dem Stand der Technik genauere Messung der Fließgeschwindigkeit eines Mediums durchgeführt werden kann.

Die Lösung der der Erfindung zugrunde liegenden Aufgabe ist für die Vorrichtung im Anspruch 1 angegeben. Diesen Erfindungsgedanken vorteilhaft weiterbildende Merkmale sind Gegenstand der Unteransprüche 2 bis 7.

Besonders herauszuheben ist bei der erfindungsgemäßen Vorrichtung, dass die Ultraschallmessstrecke im wesentlichen senkrecht zu der eigentlichen Strömungsrichtung des Mediums im Einlassrohr bzw. im Auslassrohr angeordnet ist. Somit ergibt sich eine Ultraschallmessstrecke, die einseitig von einer Ultraschallwandleranordnung begrenzt wird und die auf der anderen Seite von einem Umlenkspiegel abgeschlossen wird. Das Ultraschallsignal wird von einer ersten Abstrahlfläche bzw. Empfangsfläche der Ultraschallwandleranordnung entlang einer Wandseite einer Strömungstrennwand zu dem Umlenkspiegel ausgesendet, von diesem umgelenkt und entlang der anderen Wandseite dieser Strömungstrennwand geführt. Dort gelangt das Ultraschallsignal zu einer zweiten Abstrahlfläche bzw. Empfangsfläche der Ultraschallwandleranordnung und wird von dieser empfangen.

Lösungsgemäß gelangt somit erstmalig lediglich eine Ultraschallwandleranordnung mit einer Ultraschallmessstrecke zu Einsatz, wobei die Länge dieser Ultraschallmessstrecke deutlich größer ist als der Abstand zwischen dem Einlassrohr und dem Auslassrohr. Die Kombination aus der einfachen Ultraschallwandleranordnung mit der gegenüber dem Stand der Technik vergleichsweise wesentlich längeren erfindungsgemäßen Ultraschallmessstrecke vereinfacht einerseits die Vorrichtung und macht sie darüber hinaus spürbar genauer, das heißt, die Laufzeitunterschiede zwischen dem mit der Strömung wandernden Ultraschallsignal und dem gegenläufigen Ultraschallsignal sind auch bei kleinen Fließgeschwindigkeiten ausreichend groß, um eine verbesserte messtechnisch Auflösung zu gewährleisten.

Die Ultraschallwandleranordnung umfasst mit Vorteil lediglich einen Piezoschwinger, der eine einzige Masseelektrode aufweist und zwei flächig nebeneinander angeordnete und von einander getrennte Signalelektroden. Jeder Signalelektrode ist eine Abstrahlfläche bzw. Empfangsfläche für Ultraschallsignale zugeordnet. Eine weitere vorteilhafte Ausgestaltung der Erfindung sieht vor, dass zwei oder mehr Piezoschwinger in der einen Ultraschallwandleranordnung integriert sind. Auch bei Verwendung mehrer Piezoschwinger sind alle gemeinsam mit einer Masseelektrode verbunden, sodass der Vorteil der einen Ultraschallwandleranordnung auch hier voll zur Geltung kommt.

Eine vorteilhafte Ausgestaltung der Erfindung sieht vor, dass zwischen der ersten Abstrahlfläche bzw. Empfangsfläche und der zweiten Abstrahlfläche bzw. Empfangsfläche die erfindungswesentliche Strömungstrennwand senkrecht angeordnet ist. Besonders vorteilhaft ist die Ausbildung des Umlenkspiegels als kegelförmige Bohrung, quasi in der Mitte der gesamten Ultraschallmessstrecke. Hier wird das Ultraschallsignal einfallend von einer Wandseite der Strömungstrennwand auf die andere Wandseite derselben umgelenkt. Wenn die kegelförmige Bohrung einen Bohrungswinkel von 90° aufweist erfolgt mit ihr eine Signalumlenkung von 180°.

Des Weiteren ist die Lösung der der Erfindung zugrunde liegenden Aufgabe für das Verfahren zur Durchflussmessung im Anspruch 8 angegeben. Diesen Erfindungsgedanken weiterbildende Merkmale sind Gegenstand des Unteranspruches 9.

Da die Vorteile hinsichtlich des Verfahrens unmittelbar mit denen der Vorrichtung zur Durchflussmessung einhergehen und diese bereits oben ihre Würdigung erfuhren, wird an dieser Stelle auf eine Wiederholung verzichtet.

Alle Vorteile und Details der Erfindung hinsichtlich der Vorrichtung zur Durchflussmessung und des Verfahrens werden nachfolgend anhand des Ausführungsbeispiels näher erläutert. Es zeigen:
Fig. 1a eine erfindungsgemäße Vorrichtung zur Durchflussmessung in einer Längsschnittdarstellung und einer Querschnittdarstellung;
Fig. 1b einen Querschnitt durch eine Ultraschallmessstrecke nach Fig. 1 a;
Fig. 2a eine detailliere Schnittdarstellung einer Ultraschallwandleranordnung als Teil der Vorrichtung zur Durchflussmessung; und
Fig. 2b eine Draufsicht auf eine Ultraschallwandleranordnung nach Fig. 2a.

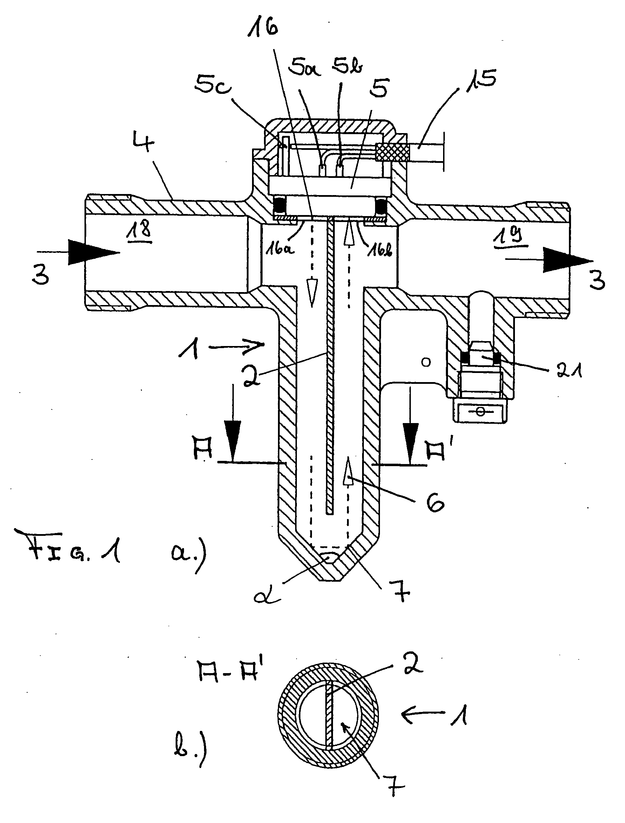

Mit 1 ist in Fig. 1a eine Ultraschallmessstrecke bezeichnet, die senkrecht zu einer Strömungsrichtung 3 eines Mediums an einem Gehäuse 4 angeordnet ist. Auf diese Weise ist zwischen einem Einlassrohr 18 und einem Auslassrohr 19 - die aufgrund der hier nicht gezeigten Einbaubedingungen vergleichsweise nahe beieinander liegen - eine längere Ultraschallmessstrecke 1 möglich als der Abstand zwischen diesem Einlassrohr 18 und diesem Auslassrohr 19 erlauben würde. An einer Seite ist die Ultraschallmessstrecke 1 mit einer Ultraschallwandleranordnung 5 begrenzt und an der andere Seite mit einem Umlenkspiegel 7.

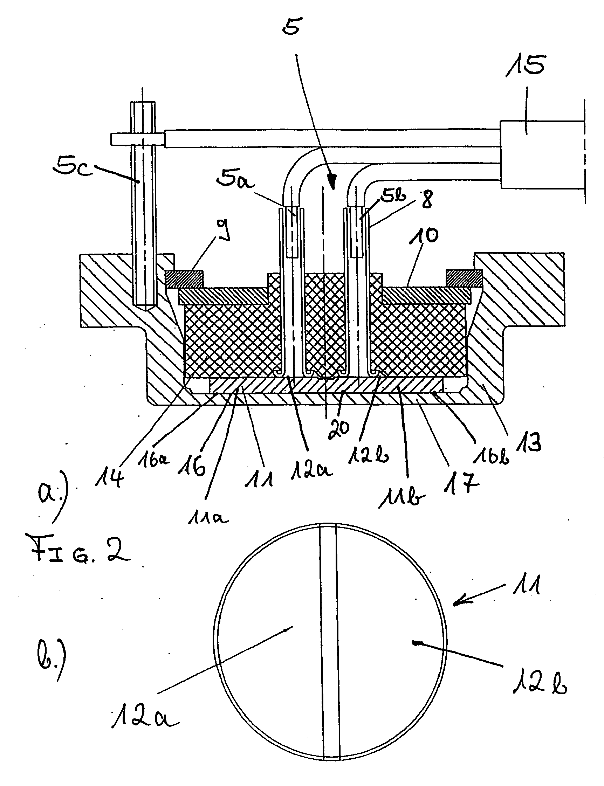

Die Ultraschallmessstrecke 1 ist mittels einer Strömungstrennwand 2 in zwei Strömungspfade aufgeteilt. Die Strömungstrennwand 2 teilt dabei nicht nur die Ultraschallmessstrecke 1 sondern darüber hinaus die Ultraschallwandleranordnung 5 in eine erste und eine zweite Abstrahl- bzw. Empfangsfläche 16 (16 a, b in Fig. 2a). Zum Umlenkspiegel 7 hin ist die Strömungstrennwand 2 unterbrochen, sodass ihr freies Ende von dem Medium - an dem Umlenkspiegel 7 vorbei - umströmt werden kann. Der Umlenkspiegel 7 ist auf einfache Weise mittels eines Bohrungsgrunds gebildet und weist einen Bohrungswinkel α auf. Dieser Bohrungswinkel α ist im günstigsten Fall 90° groß, und damit besonders einfach mittels eines entsprechenden Bohrers herstellbar. Ein Ultraschallsignal 6, das durch die Messstrecke 1 entlang der Strömungstrennwand 2 auf den Umlenkspiegel 7 auftrifft, wird durch diesen zweimal umgelenkt und auf einer Rückseite der Strömungstrennwand 2 zu der Abstrahl- bzw. Empfangsfläche 16 zurückgeführt.

Die Ultraschallwandleranordnung 5 ist mit einer Signalleitung 15 verbunden, wobei ein erster und ein zweiter Signalelektrodenanschluss 5a, 5b und ein Massenelektrodenanschluss 5c mit der Ultraschallwandleranordnung 5 elektrisch verbunden sind.

In Fig. la ist ein Schnitt mit A-A' angedeutet, dessen Darstellung in Fig. lb gezeigt ist. Hier wird verdeutlicht, wie die Strömungstrennwand 2 die Ultraschallmessstrecke 1 in zwei Strömungskanäle teilt. Die Schnittdarstellung ist so gelegt, dass der Blick auf den Umlenkspiegel 7 gerichtet ist.

Fig. 2a zeigt in vergrößerter Darstellung die Ultraschallwandleranordnung 5 in einem Schallkopfgehäuse 13. Das Schallkopfgehäuse 13 ist elektrische leitend ausgebildet und mit dem Masseelektrodenanschluss 5c der Signalleitung verbunden. Im Schallkopfgehäuse 13, dessen Gehäuseboden als Membranboden 17 ausgebildet ist, liegt ein Piezoschwinger 11. Dieser Piezoschwinger 11 wird mittels eines Dämpfungsgummis 14, einer Druckplatte 10 und eines Sicherungsrings 9 lösbar im Schallkopfgehäuse 13 gehalten. Der Dämpfungsgummi 14 weist Bohrungen auf, durch die mindestens zwei Rohrnieten 8 geführt angeordnet sind. Diese Rohrnieten 8 sind zum einen elektrisch mit dem ersten und dem zweiten Signalelektrodenanschluss 5a, b verbunden und zum anderen kontaktieren sie den Piezoschwinger 11 an einer ersten und einer zweiten metallisierten Signalelektrode 12a, b (Fig. 2b)

Der Piezoschwinger 11 weist somit auf seiner einen Seite eine gemeinsame Masseelektrode 20 auf und auf seiner anderen Seite zwei elektrisch voneinander unabhängig ansteuerbare Signalelektroden 12a, b, wie Fig. 2b erhellt. Hierdurch wird die Abstrahl- bzw. Empfangsfläche 16 des Piezoschwingers 11 für Ultraschallwellen in zwei Teilflächen geteilt, die jeweils für sich eine Abstrahl- bzw. Empfangsfläche 16a, 16b darstellen.

Wird nun ein Ultraschallsignal 6 (Fig. 1a) von der ersten Abstrahl- bzw. Empfangsfläche 16a mit der Fließrichtung 3 eines Mediums ausgesandt, so breitet sich dieses Signal entlang der Strömungstrennwand 2 bis zum Umlenkspiegel 7 aus. Dort wird das Ultraschallsignal 6 zweimal umgelenkt und auf einer Rückseite der Strömungstrennwand 2 der zweiten Abstrahl- bzw. Empfangsfläche 16b der Ultraschallwandleranordnung 5 zugeführt. Die Umlenkung des Ultraschallsignals 6 erfolgt achsensymmetrisch zu einer nicht dargestellten zentralen Bohrungsachse des Umlenkspiegels 7, so dass das Ultraschallsignal 6 integral über eine beliebige gedachte Querschnittfläche jederzeit in der Ultraschallmessstrecke die gleiche Ausbreitungsgeschwindigkeit aufweist.

Von der zweiten Abstrahl- bzw. Empfangsfläche 16b wird ebenfalls ein (hier nicht dargestelltes) Ultraschallsignal ausgesendet, das entgegen der Fließrichtung 3 des Mediums durch das Messrohr 1 wandert und von der ersten Abstrahl- bzw. Empfangsfläche 16a erfasst wird. Aus der Laufzeitdifferenz beider empfangenen Ultraschallsignale mit und gegen die Fließrichtung 3 des Mediums ergibt sich auf konventionellem Weg die Fließgeschwindigkeit des Mediums. Mit der Temperaturdifferenz - ermittelt von je einem Temperatursensor im Vorlauf und im Rücklauf einer Rohrleitung - kann nachfolgend die Bestimmung der bezogenen Wärmemenge erfolgen. Einer dieser Temperatursensoren 21 ist im Auslassrohr 19 des Gehäuses 4 eingebaut.

Durch die 90° Drehung der Ultraschallmessstrecke 1 gegenüber dem Einlassrohr 18 bzw. Auslassrohr 19 des Mediums fällt die Länge der Ultraschallmessstrecke 1 wesentlich größer aus als das Einlassrohr 18 vom Auslassrohr 19 beabstandet ist. Diese längere Ultraschallmessstrecke 1 erlaubt es, selbst kleinste Fließgeschwindigkeiten des Mediums mittels Ultraschalllaufzeitmessung exakt aufzulösen.

Darüber hinaus bedarf es mit der erfindungsgemäßen Ausführung der Gesamtanordnung lediglich eines Schallkopfgehäuses 13 mit einer Ultraschallwandleranordnung 5. Dabei ist sowohl eine Anordnung mit einem Piezoschwinger 11 mit geteilten Abstrahl- bzw. Empfangsflächen 16a, b, als auch eine Anordnung, bei der die Ultraschallwandleranordnung 5 zwei Piezoschwinger 11a, b (Fig. 2a) umfasst, möglich. Selbst mehr als zwei Piezoschwinger sind denkbar im Sinne der Erfindung.

Ohne den erfinderischen Grundgedanken zu verlassen, wäre ebenfalls denkbar die Strömungstrennwand 2 keilförmig auszugestalten, das heißt, dass die Strömungstrennwand 2 an ihrer dem Umlenkspiegel 7 zugewandten Seite konisch spitz zuläuft, wohingegen die der Ultraschallwandleranordnung 5 zugewandten Seite der Strömungstrennwand 2 dicker sein würde. Im Extremfall könnte diese Strömungstrennwand 2 auch als V-förmig gebogenes Blech ausgebildete sein. Diese Ausführungsvariante würde es neben dem verlängerten Messweg ermöglichen, dass die beiden Signalelektrodenflächen 12a, b ein wenig voneinander beabstandet werden könnten, um eine gegenseitige Beeinflussung auszuschließen. Vorzugsweise ist der Bohrungswinkel α dann entsprechend flacher als 90° und die Abstrahl- bzw. Empfangsflächen 16a, b unterstützen eine Schrägabstrahlung bzw. Schräganstrahlung.

## Patentansprüche

1. Vorrichtung zur Durchflussmessung eines strömenden Mediums, umfassend ein Einlassrohr (18) und ein Auslassrohr (19), zwischen denen eine Ultraschallmessstrecke (1) angeordnet ist, **dadurch gekennzeichnet, dass** die Ultraschallmessstrecke (1) im Wesentlichen senkrecht zu einer Strömungsrichtung (3) des Mediums im Einlassrohr (18) bzw. im Auslassrohr (19) angeordnet ist, dass ein Ultraschallsignal (6) von einer ersten Abstrahlfläche bzw. Empfangsfläche (16a) einer Ultraschallwandleranordnung (5) entlang einer ersten Wandseite einer Strömungstrennwand (2) zu einem Umlenkspiegel (7) aussendbar ist, dass dieses Ultraschallsignal (6) auf eine zweite Wandseite dieser Strömungstrennwand (2) umlenkbar ist, und dass die Ultraschallwandleranordnung (5) eine zweite Abstrahlfläche bzw. Empfangsfläche (16b) aufweist, mit der das ausgesandte Ultraschallsignal (6) empfangbar ist.

2. Vorrichtung nach Anspruch 1, **dadurch gekennzeichnet, dass** die Ultraschallwandleranordnung (5) einen Piezoschwinger (11) oder mehrere Piezoschwinger (11a, 11b) umfasst.

3. Vorrichtung nach einem der Ansprüche 1 oder 2, **dadurch gekennzeichnet, dass** die Strömungstrennwand (2) senkrecht zwischen der ersten Abstrahlfläche bzw. Empfangsfläche (16a) und der zweiten Abstrahlfläche bzw. Empfangsfläche (16b) angeordnet ist.

4. Vorrichtung nach einem der vorhergehenden Ansprüche, **dadurch gekennzeichnet, dass** die Ultraschallwandleranordnung (5) mit der ersten Abstrahlfläche bzw. Empfangsfläche (16a) und der zweiten Abstrahlfläche bzw. Empfangsfläche (16b) eine gemeinsame Masseelektrode (20) aufweist und mindestens zwei Signalelektroden (12a, 12b).

5. Vorrichtung nach einem der Ansprüche 2 oder 3, **dadurch gekennzeichnet, dass** die Signalelektroden (12a, 12b) jeweils auf einer Seite der Strömungstrennwand (2) angeordnet sind.

6. Vorrichtung nach einem der vorhergehenden Ansprüche, **dadurch gekennzeichnet, dass** der das Messrohr (1) abschließende Umlenkspiegel (7) als kegelförmige Bohrung ausgebildet ist.

7. Vorrichtung nach Anspruch 6, **dadurch gekennzeichnet, dass** die kegelförmige Bohrung einen Bohrungswinkel (α) von 90° aufweist, wobei auf den Umlenkspiegel (7) treffende Ultraschallsignale (6) zu einer zentralen Bohrungsachse achsensymmetrisch spiegelbar sind.

8. Verfahren zur Durchflussmessung eines strömenden Mediums mittels einer Ultraschallwandleranordnung (5), wobei eine Ultraschallmessstrecke
(1) zwischen einem Einlassrohr (18) und einem Auslassrohr (19) angeordnet ist **dadurch gekennzeichnet, dass** ein Ultraschallsignal (6) im Wesentlichen senkrecht zu einer Strömungsrichtung (3) des Mediums im Einlassrohr (18) bzw. im Auslassrohr (19) von einer ersten Abstrahlfläche bzw. Empfangsfläche (16a) der Ultraschallwandleranordnung (5) entlang einer ersten Wandseite einer Strömungstrennwand (2) zu einem Umlenkspiegel (7) ausgesendet wird, dass dieses Ultraschallsignal (6) auf eine zweite Wandseite dieser Strömungstrennwand (2) umgelenkt wird, dass die Ultraschallwandleranordnung (5) eine zweite Abstrahlfläche bzw. Empfangsfläche (16b) aufweist, mit der das ausgesandte Ultraschallsignal (6) empfangen wird.

9. Verfahren nach Anspruch 8 **dadurch gekennzeichnet, dass** ein weiteres Ultraschallsignal von der zweiten Abstrahlfläche bzw. Empfangsfläche (16b) der Ultraschallwandleranordnung (5) entlang der zweiten Wandseite der Strömungstrennwand (2) zu dem Umlenkspiegel (7) ausgesendet wird, dass dieses weitere Ultraschallsignal (6) auf die erste Wandseite dieser Strömungstrennwand (2) umgelenkt wird, und dass an der ersten Abstrahlfläche bzw. Empfangsfläche (16a) der Ultraschallwandleranordnung (5) das ausgesandte weitere Ultraschallsignal (6) empfangen wird.
